# EUROPÄISCHE PATENTSCHRIFT

(11) **EP 2 567 805 B1**
(45) Veröffentlichungstag und Bekanntmachung des Hinweises auf die Patenterteilung: **02.05.2018**
(21) Anmeldenummer: 12183500.3
(22) Anmeldetag: 07.09.2012
(51) Int. Cl.: B29C 65/36, B29C 65/48, B29K 105/06, B29K 307/04

(54) **Herstellung eines Faserverbundbauelementes**
Production of a fibre composite component
Fabrication d'un composant en composite contenant des fibres

(30) Priorität: 07.09.2011 DE 102011112520
(43) Veröffentlichungstag der Anmeldung: 13.03.2013
(73) Patentinhaber: Deutsches Zentrum für Luft- und Raumfahrt e.V., 51147 Köln (DE)
(72) Erfinder: Bölke, Jens, 21680 Stade (DE); Ucan, Hakan, 21684 Stade (DE); Malzahn, Sebastian, 21680 Stade (DE); Hanke, Michael, 38122 Braunschweig (DE)
(74) Vertreter: Günther, Constantin

(56) Entgegenhaltungen:
- WO-A2-2009/047010
- DE-A1-102008 044 208
- DE-A1-102008 063 651
- US-A1- 2010 133 261

## Beschreibung

Die Erfindung betrifft ein Verfahren zur Herstellung eines Faserverbundbauelementes mit wenigstens zwei aneinander angrenzenden Teilelementen aus einem Faserverbundwerkstoff, bei dem eine Klebstoffschicht zwischen jeweils mindestens einer Fügeseite der Teilelemente angeordnet wird.

Es ist bekannt, dass Faserverbundbauelemente aus verschiedenen Teilelementen zusammengesetzt werden, um so beispielsweise geometrisch komplexe Bauteile herzustellen. Ein Faserverbundbauelement wird in der Regel aus einem Faserverbundwerkstoff gebildet, bei dem ein Fasergelege mit einem Matrixharz getränkt und anschließend ausgehärtet wird. Durch die Verbindung des Matrixharzes mit den Fasern des Fasergeleges entsteht eine besonders zug- und reißfeste Verbindung, die insbesondere für die Leichtbauweise verwendet wird.

So werden beispielsweise Rumpfbauteile eines Flugzeuges aus Faserverbundwerkstoffen hergestellt. Um eine hinreichende Stabilität des Rumpfbauteils im Einsatz zu gewährleisten, werden meist an der Innenseite Verstärkungselemente, auch Stringer genannt, angeordnet, die eine Stabilität bei Einwirkung einer Kraft quer zur Bauteiloberfläche, beispielsweise durch Verbindungen, standhalten sollen.

Das Problem hierbei besteht darin, dass zum einen die Stringer nicht selten aus einem anderen Faserverbundwerkstoff hergestellt werden, als das eigentliche Rumpfbauteil, und zum anderen darin, dass aufgrund der unterschiedlichen Material- und Faserstruktur es bei der einstückigen Herstellung des Bauteils zu herstellungstechnischen Problemen kommt, da beispielsweise die Stringer eine andere Materialstärke und somit eine zu dem eigentlichen Rumpfbauteil unterschiedliche Aushärtezeit haben. Aus diesem Grunde werden die Stringer meist mit dem Rumpfbauteil verklebt, um so eine strukturfeste Verbindung zu schaffen.

Beim Verkleben zweier Teilelemente wird zunächst eine Klebstoffschicht lose zwischen die Fügeseiten der Teilelemente angeordnet, die dann unter Einwirkung von Wärmeenergie aufgeschmolzen wird, um eine feste Klebeverbindung zu erzeugen. Hierfür wird das lose zusammengestellte Arrangement in einen Ofen eingebracht, um so die Wärmeenergie auf das Bauteil einzubringen und gegebenenfalls noch nicht ausgehärtete Teilelemente auszuhärten.

Bei komplexen Bauteilen besteht hierbei oft das Problem, dass die lose zusammengesetzten Teile beim Einbringen in den Ofen verrutschen, so dass ein neuerliches Ausrichten in der Ofenanlage durchgeführt werden muss. Gerade bei Bauteilen mit sehr kleinen Toleranzwerten ist ein präzises Ausrichten oft gar nicht mehr möglich, so dass der Verfahrensschritt wiederholt werden muss. Aus diesem Grund wird nicht selten eines der Teilelemente des Faserverbundbauelementes mit Hilfe eines Bügeleisens angewärmt, um so ein leichtes Aufschmelzen des Klebstoffes zu erreichen, was zu einem Anheften der beiden Teilelemente führt. Durch dieses Anheften wird eine leichte Klebeverbindung erreicht, die die Bauteile zumindest gegen das Verrutschen sichert.

Um jedoch ein zumindest teilweises Aufschmelzen des Klebstoffes zu erreichen, muss das Bügeleisen oder die Wärmequelle, die Wärmestrahlen aussendet, eine relativ lange Zeit auf eine bestimmte Stelle des Bauteils ausgerichtet sein, damit es zu dem gewünschten Effekt kommt. Gerade bei industriellen Anwendungen führt dies nachteilig dazu, dass durch diesen lang andauernden Zwischenprozess die Taktzeiten erhöht und ein zusätzlicher Personalaufwand notwendig wird, der sich schließlich in den Produktions- und Bauteilkosten niederschlägt.

Aus der WO 2009/047010 A2 ist ein Verfahren zum Verbinden zweier Materialien mittels einer durch Wärme aktivierbaren Klebschicht bekannt, wobei die zwischen den beiden Materialien eingebrachte Klebstoffschicht mit Hilfe eines Induktionsgerätes thermisch aktiviert werden soll, um die beiden Materialien miteinander zu verbinden.

Aus der DE 10 2008 063 651 A1 ist ein Verfahren zur Verbindung von zwei jeweils aus einem Faserverbundwerkstoff bestehenden Werkstücken bekannt, die mittels Induktionsschweißens zusammengefügt werden können.

Aus der DE 10 2008 044 208 A1 sowie aus der US 2010/0133261 A1 ist eine Vorrichtung zum Aushärten eines Kunststoffmaterials bekannt, wobei das auszuhärtende Kunststoffmaterial mittels eines Linieninduktor ausgehärtet werden soll, in dem mit Induktionswärme ein entsprechender Wärmeeintrag erfolgt.

Der vorliegenden Erfindung liegt die Aufgabe zugrunde, bei der Herstellung eines Faserverbund-Bauelementes schnell und effektiv eine Klebeverbindung zu erreichen, die zumindest ein Verrutschen der beiden Teilelemente in weiteren Herstellungsschritten verhindert.

Diese Aufgabe wird erfindungsgemäß bei einem Verfahren der eingangs erwähnten Art gelöst durch Einstrahlen eines elektromagnetischen Wechselfeldes in mindestens eines der Teilelemente zur Erwärmung des jeweiligen Teilelementes zur zumindest teilweisen Erwärmung des Klebstoffes der Klebstoffschicht derart, dass eine Klebverbindung an den Fügeseiten der Teilelemente bewirkt wird.

Mindestens ein Teilelement des herzustellenden Faserverbundbauelementes wird mit einem elektromagnetischen Wechselfeld bestrahlt, durch das sich in kurzer Zeit in zumindest einem der Teilelemente eine Temperaturerhöhung erreichen lässt, die dann zumindest teilweise zu einer Erwärmung des Klebstoffes der Klebeschicht führt. Durch die Temperaturerhöhung des Klebstoffes kann beispielsweise ein leichtes Aufschmelzen des Klebstoffes erreicht werden, durch das eine leichte Klebverbindung zwischen den Teilelementen entsteht. Diese Klebverbindung verhindert beispielsweise, dass die Teilelemente beim Einbringen in einen Ofen verrutschen und somit neu ausgerichtet werden müssen. Dabei sind Einwirkzeiten von weniger als zwei Sekunden erreichbar, die gegenüber den aus dem Stand der Technik bekannten Anheftverfahren mittels externer Wärmestrahlung eine Zeitersparnis von über 70 % darstellen.

Durch das Einstrahlen eines elektromagnetischen Wechselfeldes in eines der Teilelemente werden die für Faserverbundwerkstoffe, insbesondere für Kohlenstofffaserverbundwerkstoffe, charakteristischen Wirbelströme induziert, die zu einer raschen Temperaturerhöhung des Werkstoffes der Teilelemente führt. Ein solches elektromagnetisches Wechselfeld kann beispielsweise mit Hilfe einer induktiven Heizquelle eingestrahlt werden, die eine integrierte Spule zur Erzeugung des elektromagnetischen Wechselfeldes aufweist. Durch entsprechendes Parametrisieren der induktiven Heizquelle kann das elektromagnetische Wechselfeld derart eingestellt werden, dass unabhängig von der Bauteilstärke die gewünschten Regionen entsprechend erwärmt werden, um so den Anheftvorgang durch Aufschmelzen der Klebstoffschicht zu bewirken. Somit können auch hochkomplexe Bauteile sicher angeheftet werden.

Vorteilhafterweise ist die Klebstoffschicht aus einem thermoplastischen Klebstoff gebildet.

Weiterhin ist es besonders vorteilhaft, wenn mindestens ein Teilelement des Faserverbundbauelementes bereits vollständig ausgehärtet ist, wobei dieses bereits ausgehärtete Teilelement zur Erwärmung mit Hilfe des elektromagnetischen Wechselfeldes verwendet wird. Dies hat den Vorteil, dass ein durch das elektromagnetische Wechselfeld in Gang gesetzter Polymerisationsvorgang bei noch nicht ausgehärteten Teilelementen vermieden wird, der in dem weiteren Herstellungsprozess unter Umständen negative Auswirkungen auf die Bauteilqualität hat. Denn nicht selten werden Faserverbundbauelemente aus einem bereits ausgehärteten Teilelement und einem noch nicht ausgehärteten Teilelement (Prepreg) gebildet, die erst in einem Ofen beziehungsweise Autoklaven fertig hergestellt werden.

Vorteilhafterweise wird die Dauer und Intensität des elektromagnetischen Wechselfeldes so abgestimmt, dass ein leichtes Aufschmelzen des Klebstoffes derart bewirkt wird, dass die Teilelemente angeheftet werden. Die vollständige Aushärtung der Klebeverbindung erfolgt dann in einem Ofen bei höheren Temperaturen. Denkbar ist aber auch, dass bei kleineren Klebestellen die Intensität so gewählt wird, dass die Klebstoffschicht bei Anwendung des elektromagnetischen Wechselfeldes vollständig aushärtet und die endgültige Klebeverbindung bewirkt wird.

Nach Anheften der beiden Teilelemente durch die Klebverbindung der Klebstoffschicht wird die Klebverbindung in einem Ofen, bspw. in einem Autoklav, vollständig ausgehärtet. Somit wird es möglich, die Teilelemente in den Ofen einzubringen, ohne die Gefahr fürchten zu müssen, dass die Teilelemente beim Einbringen in den Ofen verrutschen.

Die Erfindung wird anhand der beigefügten Zeichnung beispielhaft näher erläutert. Es zeigt:

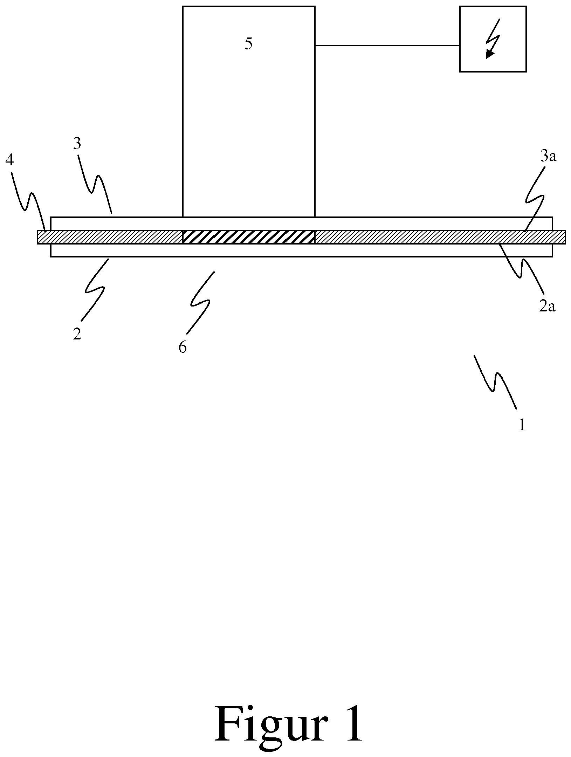

- Figur 1 -: schematische Darstellung des Anheftens zweier Teilelemente.

Figur 1 zeigt ein Faserverbundbauelement 1, das ein unteres Teilelement 2 und ein oberes Teilelement 3 aufweist. Zwischen dem unteren Teilelement 2 und dem oberen Teilelement 3 ist eine Klebstoffschicht 4 aus einem thermoplastischen Filmklebstoff angeordnet, um eine Klebeverbindung zwischen der Fügeseite 2a des unteren Teilelementes 2 und der Fügeseite 3a des oberen Teilelementes 3 zur Herstellung eines zusammengeklebten Faserverbundelementes zu bewirken.

Zum Erzeugen der endgültigen Klebeverbindung wird die Klebstoffschicht 4 zunächst lose zwischen den Teilelementen 2 und 3 angeordnet und anschließend das Arrangement in einem Ofen gebacken. Um ein Verrutschen beim Einlegen des losen Arrangements in den Ofen zu verhindern, wird nach der Anordnung ein elektromagnetisches Wechselfeld durch eine induktive Wärmequelle 5, die eine integrierte Spule (nicht dargestellt) aufweist, eingestrahlt. Durch die Wechselwirkung des elektromagnetischen Wechselfeldes mit dem Faserverbundwerkstoff der Teilelemente 2 und 3 werden charakteristische Wirbelströme induziert, die zu einer Erwärmung der Teilelemente 2 und 3 im Bereich 6 der Teilelemente 2 und 3 führt. Durch diese punktuelle Erwärmung im Bereich 6 der Teilelemente 2 und 3 wird der Klebstoff der Klebstoffschicht 4 in diesem Bereich 6 ebenfalls erwärmt, was zu einem teilweisen Aufschmelzen des thermoplastischen Klebstoffs der Klebstoffschicht 4 führt. Durch das Aufschmelzen des Klebstoffes 4 im Bereich 6 entsteht eine leichte Klebeverbindung, die ein Anheften der beiden Teilelemente 2 und 3 bewirkt, so dass das Arrangement 1 in einen Ofen eingebracht werden kann, um die Klebeverbindung der Klebstoffschicht 4 vollständig auszuhärten oder um ein noch nicht ausgehärtetes Teilelement 2 oder 3 entsprechend auszuhärten, ohne dass es zu einem Verrutschen oder Verschieben der Teilelemente 2 und 3 kommt.

## Patentansprüche

1. Verfahren zur Herstellung eines Faserverbundbauelementes (1) mit wenigstens zwei miteinander verklebten Teilelementen (2, 3) aus einem Faserverbundwerkstoff, mit den Schritten:
a) Anordnen einer Klebstoffschicht (4) zwischen jeweils mindestens einer Fügeseite (2a, 3a) der Teilelemente (2, 3),
**gekennzeichnet durch,**
b) Einstrahlen eines elektromagnetischen Wechselfeldes in mindestens eines der Teilelemente (2, 3) zur Erwärmung des jeweiligen Teilelementes zur zumindest teilweisen Erwärmung des Klebstoffes der Klebstoffschicht (4) derart, dass eine Klebeverbindung an den Fügeseiten (2a, 3a) der Teilelemente (2, 3) bewirkt wird, wobei die Dauer und Intensität des elektromagnetischen Wechselfeldes so abgestimmt sind, dass ein teilweises Aufschmelzen des Klebstoffes derart bewirkt wird, dass die Teilelemente aneinander geheftet werden, und
c) vollständiges Aushärten der Klebverbindung der Klebstoffschicht in einem Ofen.

2. Verfahren nach Anspruch 1, **dadurch gekennzeichnet, dass** das elektromagnetische Wechselfeld derart eingestrahlt wird, dass ein Anheften der Teilelemente (2, 3) durch die Klebeverbindung bewirkt wird.

3. Verfahren nach einem der vorhergehenden Ansprüche, **dadurch gekennzeichnet, dass** mindestens eines der Teilelemente (2, 3) aus einem Kohlenstofffaserverbundwerkstoff gebildet ist.

4. Verfahren nach einem der vorhergehenden Ansprüche, **dadurch gekennzeichnet, dass** die Klebstoffschicht (4) aus einem thermoplastischen Klebstoff gebildet ist.

5. Verfahren nach einem der vorhergehenden Ansprüche, **dadurch gekennzeichnet, dass** bei mindestens einem der Teilelemente (2, 3) das Matrixharz bereits ausgehärtet ist, wobei das elektromagnetische Wechselfeld in dieses Teilelement eingestrahlt wird.

6. Verfahren nach einem der vorhergehenden Ansprüche, **dadurch gekennzeichnet, dass** das elektromagnetische Wechselfeld durch eine induktive Wärmequelle (5) mit einer integrierten Spule eingestrahlt wird.

## Claims

1. Method for producing a fibre composite construction element (1) having at least two mutually bonded sub-elements (2, 3) composed of a fibre composite material, with the steps of:
a) disposing a layer (4) of adhesive between in each case at least one joining side (2a, 3a) of the sub-elements (2, 3),
**characterized by**
b) irradiating an alternating electromagnetic field into at least one of the sub-elements (2, 3) to heat the respective sub-element for the at least partial heating of the adhesive of the layer (4) of adhesive, in such a way as to produce an adhesive bond at the joining sides (2a, 3a) of the sub-elements (2, 3), the duration and intensity of the alternating electromagnetic field being coordinated so as to produce a partial melting of the adhesive in such a way that the sub-elements are affixed to one another, and
c) fully curing the adhesive bond of the layer of adhesive in an oven.

2. Method according to Claim 1, **characterized in that** the alternating electromagnetic field is irradiated in such a way as to produce an affixing of the sub-elements (2, 3) by means of the adhesive bond.

3. Method according to either of the preceding claims, **characterized in that** at least one of the sub-elements (2, 3) is formed of a carbon fibre composite material.

4. Method according to any of the preceding claims, **characterized in that** the layer (4) of adhesive is formed of a thermoplastic adhesive.

5. Method according to any of the preceding claims, **characterized in that** for at least one of the sub-elements (2, 3) the matrix resin is already cured and it is this sub-element into which the alternating electromagnetic field is irradiated.

6. Method according to any of the preceding claims, **characterized in that** the alternating electromagnetic field is irradiated by means of an inductive heat source (5) with an integrated coil.

## Revendications

1. Procédé de fabrication d'un composant en composite contenant des fibres (1) avec au moins deux éléments partiels (2, 3) en un matériau en composite contenant des fibres collés l'un à l'autre, comprenant les étapes suivantes:
a) disposer une couche de colle (4) entre chaque fois au moins une face de jonction (2a, 3a) des éléments partiels (2, 3),
**caractérisé par** les étapes
b) injecter un champ électromagnétique alternatif dans au moins un des éléments partiels (2, 3) pour chauffer l'élément partiel respectif en vue de chauffer au moins en partie la colle de la couche de colle (4), de telle manière qu'un assemblage collé soit formé sur les faces de jonction (2a, 3a) des éléments partiels (2, 3), dans lequel on accorde la durée et l'intensité du champ électromagnétique alternatif de telle manière que les éléments partiels soient agrafés l'un à l'autre, et
c) durcir à coeur entièrement l'assemblage collé de la couche de colle dans un four.

2. Procédé selon la revendication 1, **caractérisé en ce que** l'on injecte le champ électromagnétique alternatif de telle manière qu'un agrafage des éléments partiels (2, 3) soit provoqué par l'assemblage collé.

3. Procédé selon l'une quelconque des revendications précédentes, **caractérisé en ce qu'**au moins un des éléments partiels (2, 3) est formé d'un matériau en composite contenant des fibres de carbone.

4. Procédé selon l'une quelconque des revendications précédentes, **caractérisé en ce que** la couche de colle (4) est formée d'une colle thermoplastique.

5. Procédé selon l'une quelconque des revendications précédentes, **caractérisé en ce que** pour au moins un des éléments partiels (2, 3), la résine de la matrice est déjà durcie à coeur, dans lequel le champ électromagnétique alternatif est injecté dans cet élément partiel.

6. Procédé selon l'une quelconque des revendications précédentes, **caractérisé en ce que** le champ électromagnétique alternatif est injecté par une source de chaleur à induction (5) avec une bobine intégrée.
